# EUROPEAN PATENT SPECIFICATION

(11) **EP 3 872 588 B1**
(45) Date of publication and mention of the grant of the patent: **03.05.2023**
(21) Application number: 19876760.0
(22) Date of filing: 10.04.2019
(51) Int. Cl.: G05B 19/408

(54) **NC PROGRAM CONVERSION PROCESSING METHOD AND COMPUTER FOR CONVERSION**
VERFAHREN ZUR VERARBEITUNG DER UMSETZUNG VON NC-PROGRAMMEN UND COMPUTER ZUR UMSETZUNG
PROCÉDÉ DE TRAITEMENT DE CONVERSION DE PROGRAMME NC ET ORDINATEUR POUR CONVERSION

(30) Priority: 23.10.2018 JP 2018199306
(43) Date of publication of application: 01.09.2021
(73) Proprietor: Hitachi, Ltd., Tokyo 100-8280 (JP)
(72) Inventor: KONO, Ippei, Tokyo 100-8280 (JP); UTSUMI, Koji, Tokyo 100-8280 (JP); SAKAMOTO, Eiji, Tokyo 100-8280 (JP)
(74) Representative: MERH-IP Matias Erny Reichl Hoffmann Patentanwälte PartG mbB
(86) International application number: PCT/JP2019/015568
(87) International publication number: WO 2020/084814

(56) References cited:
- WO-A1-98/19820
- JP-A- H0 639 681
- JP-A- S6 299 052
- JP-A- 2003 263 208
- JP-A- 2011 237 885
- US-A- 4 833 617
- US-A- 5 828 574

## Description

### Technical Field

The present invention relates to a technique for converting an NC program for numerical control (NC).

### Background Art

In recent years, a workpiece (hereinafter sometimes referred to as a workpiece) may be processed by inputting an NC program to an NC machine tool.

For example, JP-A-2003-263208 (PTL 1) discloses "The NC program apparatus 1 replaces the machining shape required for the workpiece 5 with a predetermined fixed machining cycle according to the designation of machining conditions including the machining start point, machining end point, and size of the end mill E to be used, repeats the calculation of the predicted value of the cutting resistance applied to the end mill E that is fed and moved along the assumed feed route in the fixed machining cycle until a predetermined comparative evaluation result is obtained with a predetermined appropriate value, and determines the feed route of the end mill E along with the feed rate in each part." Furthermore, both PTL 2 and PTL 3 disclose a method for determining adaptive feedrates for NC machining, respectively, wherein both documents teach that for every tool motion a material removal rate, average cutting force, and cutting tool deflection is calculated and based on said calculating, an adjusted feedrate per tool motion is selected to optimize productivity without violating user set constraints including cutting force and tool deflection.

### Citation List

### Patent Literature

PTL 1: JP-A-2003-263208
PTL 2: US 5 828 574 A
PTL 3: US 4 833 617 A

### Summary of Invention

### Technical Problem

In the technique disclosed in PTL 1, high precision in working is achieved by changing the feed rate and the depth of cut while the tool is in contact with the workpiece(referred to as a workpiece herein). As a result, however, differences in levels caused by the correction during the cutting of a cut surface of a workpiece are generated.

The present invention has been made in view of the above circumstances and an object thereof is to provide a technique for converting an NC program to an NC program capable of ensuring appropriate precision in working while avoiding the occurrence of differences in levels caused by the correction during the cutting of a cut surface of a workpiece.

### Solution to Problem

The above problem is solved according to the present invention as set out in the appended set of claims. Preferred embodiments of the present invention are described in the dependent claims.

### Advantageous Effects of Invention

According to the present invention, an NC program can be converted into an NC program capable of ensuring appropriate precision in working.

### Brief Description of Drawings

[Fig. 1] Fig. 1 is an overall configuration diagram of a work process system according to an embodiment.
[Fig. 2] Fig. 2 is a configuration diagram of a conversion use computer according to an embodiment.
[Fig. 3] Fig. 3 is a configuration diagram of a conversion input screen according to an embodiment.
[Fig. 4] Fig. 4 is a configuration diagram of a download confirmation screen according to an embodiment.
[Fig. 5] Fig. 5 is a flowchart of a conversion process according to an embodiment.
[Fig. 6] Fig. 6 is a diagram showing a shape of a workpiece before cutting according to an embodiment.
[Fig. 7] Fig. 7 is a diagram showing a target shape of a workpiece after cutting according to the embodiment.
[Fig. 8] Fig. 8 is a diagram showing a shape of a workpiece during a cutting process according to an embodiment.
[Fig. 9] Fig. 9 is a diagram illustrating a description of a pre-correction NC program and a tool path in a corresponding workpiece cutting process according to an embodiment.
[Fig. 10] Fig. 10 is a diagram illustrating a description of a post-correction NC program and a tool path in a corresponding workpiece cutting process according to an embodiment.

### Description of Embodiments

The embodiments will be described with reference to the drawings. The embodiments described below do not limit the invention according to the scope of the claims, and all of the elements and combinations thereof described in the embodiments are not always essential for the solution to the problems of the invention.

### <System Configuration>

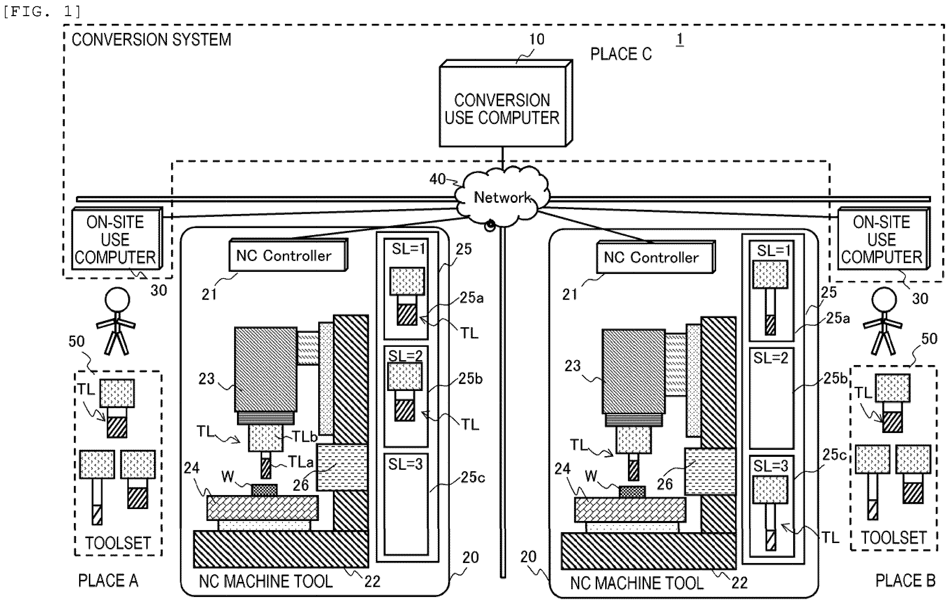

Fig. 1 is an overall configuration diagram of a work process system according to an embodiment.

The work process system 1 includes a conversion use computer 10, a plurality of NC machine tools 20 (an example of a work machine), and a plurality of on-site use computers 30. The conversion use computer 10, the plurality of NC machine tools 20, and the plurality of on-site use computers 30 are connected via a network 40. The network 40 may be a wired network or a wireless network. In the present embodiment, the NC machine tool 20 and the on-site use computer 30 are arranged at each of a place A and a place B, and the conversion use computer 10 is arranged at a place C. The conversion use computer 10 may be arranged at either the place A or the place B. The plurality of NC machine tools 20 and the plurality of on-site use computers 30 may be arranged at the same place.

The conversion use computer 10 executes the process of converting an NC program for a certain NC machine tool 20 (conversion source NC program: pre-correction NC program) into an NC program for another NC machine tool 20 (conversion result NC program: post-correction NC program). The details of the conversion use computer 10 will be described later.

The on-site use computer 30 is a computer operated by an on-site operator and is composed of, for example, a personal computer (PC) including a processor, storage resources, and the like. The on-site referred to here is typically a place where the NC machine tool 20 is installed (for example, in a factory, a building, a floor, or the like) in Fig. 1. However, if the on-site use computer 30 is used for displaying the screen of the conversion use computer 10, the on-site use computer 30 may be used at a place other than the place where the NC machine tool 20 is installed.

The following description describes an example in which the on-site use computer 30 is in charge of the download process and screen display of the post-conversion NC program, the screen display of the conversion input screen, and the like, and the conversion use computer 10 is in charge of the actual conversion process. However, although the convenience is somewhat reduced, the roles (including some roles) that each computer is in charge of can be exchanged or integrated with each other. The conversion use computer 10 may be composed of a plurality of computers. Therefore, in the following description, the term "conversion system" may be used. The system includes one or more computers (on-site use computer 30 or conversion use computer 10) and is a system that performs the processes described below that the conversion use computer 10 and the on-site use computer 30 are in charge of. A part of the processing realized by the on-site use computer 30 may be omitted.

The NC machine tool 20 is, for example, a machining center and includes a main body 22 that executes the work process, an NC controller 21 that controls the work process of the main body 22, and a tool magazine 25 as an example of an accommodating unit capable of accommodating tools TL including one or more toolsets to be used in the main body 22.

The tool magazine 25 includes a plurality of slots (SL: 25a, 25b, and 25c) each capable of accommodating one tool TL.

The NC controller 21 controls the work process of the main body 22 and the tool changing process according to the NC program stored inside.

The main body 22 includes a processing head unit 23, a stage 24, and a tool change unit 26 as an example of an exchange unit. The processing head unit 23 includes a rotatable spindle on which a tool TL can be mounted. The processing head unit 23 may be the spindle itself. The stage 24 is movable on which the workpiece (workpiece) W, which is the target of the work process, is placed. The tool change unit 26 removes the tool TL from the processing head unit 23 and accommodates the tool TL in an empty slot of the tool magazine 25. The tool change unit 26 takes out a tool TL from the slot of the tool magazine 25 and mounts the tool TL to the processing head unit 23. An example of the tool change unit 26 is a change arm (also referred to as an ATC arm) of an automatic tool changer (ATC). The tool magazine 25 described above is also a component of the automatic tool changer. The NC program can internally describe a series of commands (in the NC program terminology, referred to as a code or a word in which parameters are added to the code) meaning a tool change command, and the tool change command includes a slot number that indicates the location of the slot (meaning will be described later) in the tool magazine 25. The tool change unit 26 takes out the tool TL from the slot specified by the slot number included in the parameter of the tool change command according to the instruction of the NC controller 21 that has read the tool change command and attaches the tool TL to the processing head unit 23.

In the NC machine tool 20, the number of tools TL that can be accommodated in the tool magazine 25 is limited, but various work processes can be supported by preparing one or more toolsets 50 in advance and replacing the toolset accommodated in the tool magazine 25 according to the work process to be executed.

In the present embodiment, the tool TL includes a blade unit TLa such as an end mill, a drill, and a cutting tool for cutting the workpiece W, and a holder TLb for mounting the blade unit TLa on the processing head unit 23. However, for example, when the blade unit TLa can be mounted on the processing head unit 23 as it is, the holder TLb may not be included and at least the blade unit TLa only needs to be included.

In the following description, the entity including at least a work machine that has performed the machining using an NC program to be converted (that is, a conversion source NC program) and a toolset corresponding to the work machine will be sometimes referred to as a "conversion source environment". The entity including at least a work machine scheduled to perform the machining using a post-conversion NC program (that is, a conversion result NC program) and a toolset corresponding to the work machine will be sometimes referred to as a "conversion result environment". In the conversion source environment and the conversion result environment, a physical or logical entity included in each place (for example, the temperature, temperature sensor, humidity, humidity sensor of the place, or the floor where the work machine is installed in the place, the building that makes up the place) may be included. The "toolset corresponding to the work machine" includes a toolset stored in the tool magazine of the work machine and a toolset that may be stored and used in the tool magazine in the future. The toolset corresponding to the work machine is typically installed in the same place as the work machine.

Next, the conversion use computer 10 will be described in detail.

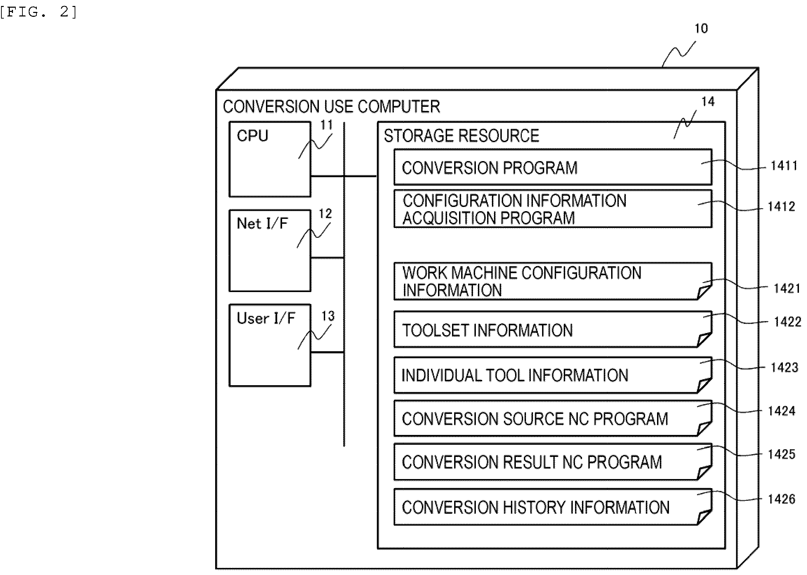

Fig. 2 is a configuration diagram of a conversion use computer according to an embodiment.

### <<Hardware>>

The conversion use computer 10 is, for example, a personal computer or a general-purpose computer. The conversion use computer 10 includes a CPU 11 as an example of a processor, a network interface 12 (abbreviated as Net I/F in the drawing), a user interface 13 (User I/F in the drawing), a storage resource 14 as an example of a storage unit, and an internal network that connects these configurations.

The CPU 11 can execute the program stored in the storage resource 14. The storage resource 14 stores a program to be executed by the CPU 11, various information used in this program, an NC program used by the NC machine tool 20, and the like. The storage resource 14 may be, for example, a semiconductor memory, a flash memory, a hard disk drive (HDD), a solid state drive (SSD), or the like, and may be a volatile memory or a non-volatile memory.

The network interface 12 is an interface for communicating with an external device (for example, the on-site use computer 30, the NC controller 21 of the NC machine tool 20, and the like) via the network 40.

The user interface 13 is, for example, a touch panel, a display, a keyboard, a mouse, or the like, but may be another device as long as operations from an operator (user) can be received and information can be displayed. The user interface 13 may be composed of these multiple devices.

### <<Data and the like>>

The storage resource 14 stores work machine configuration information 1421, toolset information 1422, individual tool information 1423, conversion source NC program 1424, conversion result NC program 1425, and conversion history information 1426. The storage resource 14 may store other information. The details of each data and program are described from the next paragraph. Each information or some items of each information may be omitted.
* Work machine configuration information 1421. The work machine configuration information 1421 is configured as, for example, a table that stores information related to each NC machine tool 20. The work machine configuration information 1421 includes each information shown below for each NC machine tool 20.
(a1) Identifier (work machine ID) of the NC machine tool 20. As the work machine ID, the identifier of the NC controller 21 or the network address of the NC controller 21 may be used instead.
(a2) The model number of the NC machine tool 20.
(a3) The installation location of the NC machine tool 20.
(a4) Usage record of the NC machine tool 20, for example, use time.
(a5) The temperature of a predetermined portion of the NC machine tool 20. The predetermined portion may be the spindle of the NC machine tool 20, or the stage 24.
(a6) Information related to the rigidity of a predetermined portion of the NC machine tool 20 (for example, Young's modulus of the portion, deflection amount, or the like). The predetermined portion may be the spindle of the processing head unit 23 of the NC machine tool 20, or the stage 24.
(a7) The shape of a predetermined portion of the NC machine tool 20. The shape of the predetermined portion may be the length of the spindle of the NC machine tool 20 or the length of the stage 24.
(a8) The maximum number of tools that can be accommodated in the tool magazine 25, that is, the number of slots.
(a9) The offset value set according to aging and the installation environment. The offset value is a value used to finely correct the coordinates when moving the tool in the NC program and is a value used to correct a situation such as the stage being slightly tilted due to aged deterioration.
(a10) Manufacturer, model number, or the like of the NC controller 21. The NC controller 21 may have a slightly different description format of the NC program depending on the manufacturer and model number and is used to determine such a situation.
(a11) Rattling, movement accuracy (for example, stage backlash amount, or the like), linearity, flatness, translation mobility, vibration width, and vibration frequency during device operation, of components such as spindles and stages.

In the present embodiment, the information of (a1), (a2), (a4), (a5), (a8), (a9), and (a10) is acquired from, for example, the NC controller 21 of the NC machine tool 20. On the other hand, (a3), (a6), (a7), and (a11) are acquired from the input information by the operator. The method of acquiring information is not limited thereto, and at least a part of (a1), (a2), (a4), (a5), (a8), (a9), and (a10) may be acquired from the input information by the operator via the user interface 13, and among (a3), (a6), (a7), and (a11), the information that can be acquired from the NC controller 21 may be acquired from the NC controller 21. The information acquired from the NC controller 21 may also be acquired from an alternative device (for example, another computer or the sensor itself).
* Tool information (toolset information 1422 and individual tool information 1423)

The toolset information 1422 is information for managing a group (set) composed of one or more tools TL. The toolset information 1422 is a set including toolset identification information (toolset ID), identifiers of one or more tools TL constituting the set, or model numbers.

The individual tool information 1423 is information related to each tool. The individual tool information 1423 includes each information shown below.

(b1) Identifier of the tool TL (tool ID: for example, serial number, or the like). As the identifier of the tool TL, if an individual ID is given to the blade unit TLa or the holder TLb, the value may be used, and if not, the CPU 11 that executes the configuration information acquisition program 1412 may give automatically.

(b2) The model number of the tool TL (example of tool identification information). For example, the respective model numbers of the blade unit TLa and the holder TLb configuring the tool TL. If the tool TL is composed of only the blade unit TLa, only the model number of the blade unit TLa may be used. If the blade unit TLa is composed of a plurality of parts, all the model numbers of the parts may be used, or some model numbers of the parts may be used.

(b3) Material, shape, rigidity (Young's modulus, deflection amount, or the like), usage history, temperature, or the like of the tool TL (for example, the blade unit TLa and the holder TLb, respectively). Here, since the rigidity changes depending on the material and shape of the tool TL, this information is also information on the rigidity. Unless otherwise specified, the "shape" includes representative values obtained from shapes such as the length, the length that the blade unit TLa protrudes from the holder TLb (blade protrusion length), the thickness of the blade unit TLa, and the linearity of the blade unit TLa, in addition to the three-dimensional shape and cross-sectional shape generally shown in drawings and CAD data.

(b4) Information (location information, slot number) of the arrangement position (slot) of the tool magazine 25 in which the tool should be accommodated.

In the present embodiment, the information (b1) to (b4) is acquired from, for example, input information by the operator via the user interface 13, but information that can be acquired from the NC controller 21 may be acquired from the NC controller 21.
* The conversion source NC program 1424 is an NC program used for the work process in the NC machine tool 20 of the conversion source (referred to as the conversion source NC machine tool 20). The conversion source NC program 1424 may be tuned to the characteristics and state of the conversion source NC machine tool 20 in order to maintain the precision in working of the target object obtained by the work process by the conversion source NC machine tool 20 at predetermined precision.
* The conversion result NC program 1425 is an NC program obtained by converting the conversion source NC program 1424 to match the NC machine tool 20 of the conversion result (referred to as the conversion result NC machine tool 20). If the conversion process is not performed on any of the conversion source NC programs 1424, the conversion result NC program 1425 does not exist.
* The conversion history information 1426 is information that manages the history of the conversion process when the conversion source NC program 1424 is converted into the conversion result NC program 1425. The conversion history information 1426 is, for example, the information in which identification information that identifies the conversion process is associated with various information (input information, or the like) used during the conversion process.

The following information may be stored in the storage resource 14.
* Workpiece W information. The information is, for example, information such as shape data before machining of the workpiece W, material, rigidity, and machining target shape data of the workpiece W. The machining target shape data is data indicating the target shape at the time of machining by the NC program. If the workpiece W can be machined to the target shape, it means that the error is zero.
* Information on the pre-conversion environment or conversion result environment other than the work machine configuration information 1421, the toolset information 1422, and the individual tool information 1423. In order to clarify the information, the information may be called "other pre-conversion environment information" or "other pre-conversion environment information".

### <Program Operating on Conversion Use Computer>

### <<Conversion Program 1411>>

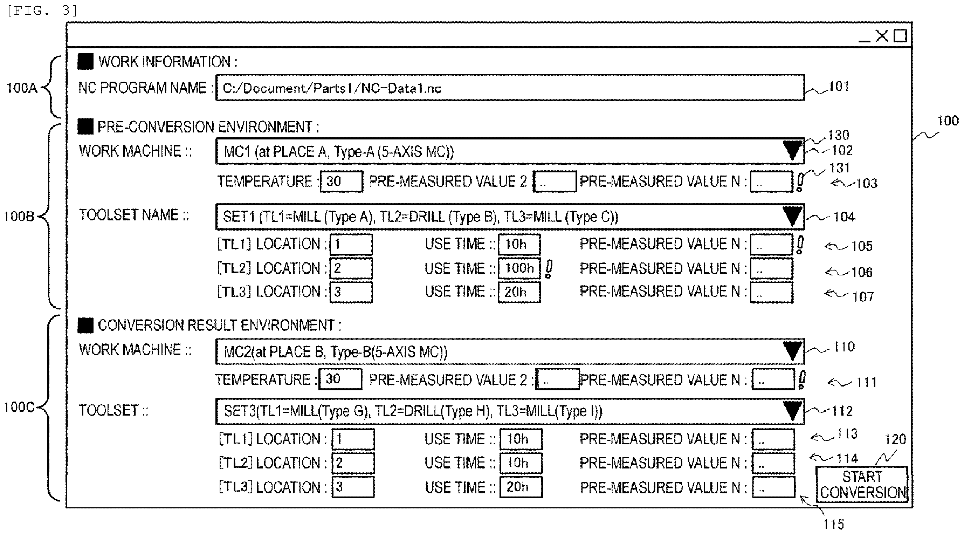

The conversion program 1411 executes the following processes by being executed by the CPU 11. Here, the conversion unit is configured by the CPU 11 executing the conversion program 1411.
* When a conversion start button 120 of a conversion input screen 100 (see Fig. 3) described later is pressed, the conversion program 1411 executes the conversion process of converting the conversion source NC program 1424 to be converted into the conversion result NC program 1425, based on various information input to the conversion input screen 100 by reflecting various information input to the conversion input screen 100 into the work machine configuration information 1421, the toolset information 1422, and the individual tool information 1423, and information of the conversion result environment or the information of the conversion source environment included in the work machine configuration information 1421, the toolset information 1422, and the individual tool information 1423, and stores the obtained conversion result NC program 1425 in the storage resource 14.

In the conversion process of converting the conversion source NC program 1424 to the conversion result NC program 1425, for example, the conversion program 1411 sets the data obtained by changing or adding the command of the conversion source NC program 1424 based on the information related to the rigidity of the conversion result NC machine tool 20 or the rigidity of the tool TL of the toolset 50 used by the conversion result NC machine tool 20, as the conversion result NC program 25. The commands to be added or changed include tool diameter compensation, tool length compensation, tool wear compensation, feed rate, or cutting speed, so that a significant change in machining work such as an increase in the number of machining of the workpiece W by the tool TL may be avoided. However, a command (for example, a command corresponding to trial cutting) that increases the number of machining the workpiece W may be added.

In the conversion process of converting the conversion source NC program 1424 into the conversion result NC program 1425, if at least a part of the description format for the NC program is different between the NC controller 21 of the conversion source NC machine tool 20 and the NC controller 21 of the conversion result NC machine tool 20, the conversion program 1411 converts the description of the conversion source NC program for the portion where the description format is different into the description format for the NC controller 21 of the conversion result NC machine tool 20. As a result, the NC controller 21 of the conversion result NC machine tool 20 can perform the work process without any trouble.

The conversion program 1411 may describe, as a comment in the conversion result NC program 1425, the work machine ID of the conversion result NC machine tool 20, the model number (or identifier) of each tool TL of the toolset specified to be used in the conversion result NC machine tool 20, and the arrangement location information (slot number) of each tool TL. For example, as a comment, "MC2 : SL1 : ML7x, ..." may be described. Here, MC2 is a work machine ID, SL1 is a slot number, and ML7x is a model number of a mill. By referring to the comment, it is possible to understand which NC machine tool 20 the conversion result NC program 1425 targets and what kind of tool should be stored in which slot. The use of each tool TL specified to be used and the arrangement location information of each tool TL may be described as comments in the conversion result NC program 1425. By adding such a comment, the amount of data in the conversion result NC program 1425 will increase, but since the comment can always be managed integrally with the conversion result NC program, it is possible to reduce to mistakenly use an unexpected NC machine tool 20 and tool TL. In the following description, the comment explained here may be referred to as "conversion result device or tool comment".

The conversion program 1411 stores the conversion process ID (conversion history ID) as a comment in the conversion result NC program 1425 and stores the conversion history information 1426 in which the conversion history ID and various information input to the conversion input screen 100 are associated with each other in the storage resource 14. By matching the conversion history ID stored as a comment in the conversion result NC program 1425 with the conversion history information 1426, various values considered at the time of conversion can be grasped, and it is possible to investigate the cause when the precision of the work process by the conversion result NC program 1425 is insufficient. In the following description, a comment like here may be called a "history comment".

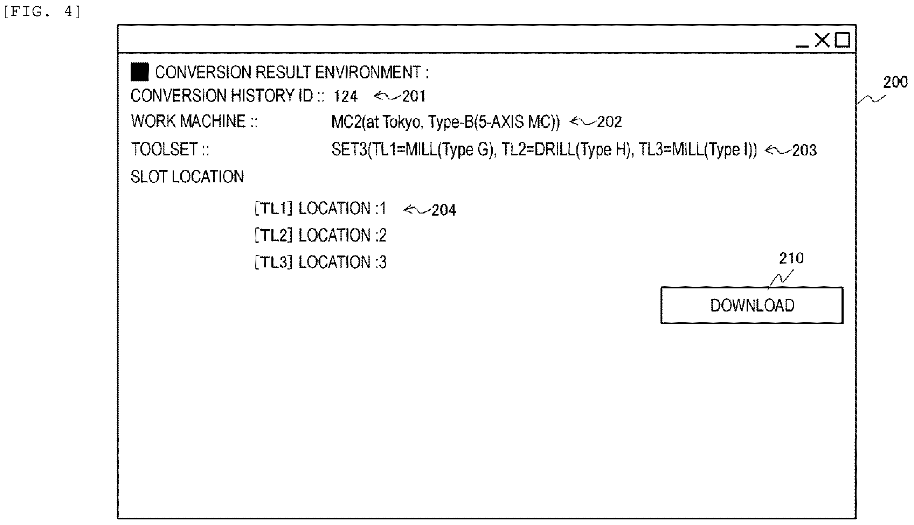

It is conceivable that the conversion process by the conversion program 1411 may be performed multiple times. For example, it is a case where it is desired to further convert the conversion result NC program 1425 converted for the first time for another NC machine tool 20 or toolset. In such a case, the above-mentioned "conversion result device or tool comment" and "history comment" may exist in the conversion result NC program 1425 by the amount of the conversion multiplicity. However, it is preferable to keep only the comments generated by the last conversion and delete the comments before that. Especially in the "conversion result device or tool comment", the only thing the operator should see is the comment given in the last conversion.
* After the conversion process, the conversion program 1411 displays a download confirmation screen 200 (see Fig. 4) described later, and when a download button 210 is pressed, the conversion result NC program 1425 is transmitted to the on-site use computer 30 at the place where the NC controller 21 of the conversion result NC machine tool 20, or the conversion result NC machine tool
20 is located.

### <<Configuration Information Acquisition Program 1412>>

The configuration information acquisition program 1412 executes the following processes by being executed by the CPU 11. Here, the rigidity information receiving unit is configured by the CPU 11 executing the configuration information acquisition program 1412.
* The configuration information acquisition program 1412 acquires various information related to the NC machine tool 20 from the NC controller 21. The information to be acquired includes the above-mentioned information (a1), (a2), (a4), (a5), (a8), (a9), and (a10).
* The configuration information acquisition program 1412 displays the conversion input screen 100 on the user interface 13 to acquire various information (information related to the NC machine tool 20 acquired from the operator ((a3), (a6), (a7), and (a11)), and information related to the toolset 50 (information of (b1) to (b4))) from the operator via the conversion input screen 100.
* When the required information is not input or is not appropriate (when the information is out of date) on the conversion input screen 100, the configuration information acquisition program 1412 displays an alert symbol ("!", or the like) in the vicinity of the input area of the information. The configuration information acquisition program 1412 may display the conversion start button 120 of the conversion input screen 100, for example, as a state incapable of being pressed so that the execution of the conversion process is not started when the required information is not input or is not appropriate. By doing so, it is possible to appropriately prevent the execution of the conversion process when an error occurs in the conversion.
* The configuration information acquisition program 1412 executes the filtering process such as setting the input value in the selection input area in the conversion result environment to an appropriate value or narrowing down the selection candidates that can be selected by pulling down based on the information of the conversion source environment (that is, the information of the conversion source NC machine tool 20 and the information related to the toolset 50 of the conversion source NC machine tool 20). For example, the configuration information acquisition program 1412 narrows down only toolsets having the same number of tools as the number of tools of the toolset selected in the conversion source environment as toolset selection candidates at the conversion result.

Next, the conversion input screen 100 displayed by the configuration information acquisition program 1412 will be described in detail.

### Conversion Input Screen>

Fig. 3 is a configuration diagram of a conversion input screen according to an embodiment. The conversion input screen 100 is, for example, a screen composed of the following description areas and including a screen object for input or display in each area.
* Pre-conversion environment area 100B. The area contains screen objects for inputting or displaying the pre-conversion environment.
* Conversion result environment area 100C. The area contains screen objects for inputting or displaying the conversion result environment.
* Processing information area 100A. The area contains screen objects for inputting or displaying information related to information independent of the pre-conversion environment and the conversion result environment.

The processing information area 100A includes the following. In the following description, the term "area" for display and input is used, but this refers to a screen object for display or an area including a screen object for input.
* File name input area 101 for inputting the file name of the NC program to be converted (conversion source).

The pre-conversion environment area 100B includes the following.
* Conversion source work machine designation area 102 for selecting and designating the work machine ID and configuration information of the conversion source NC machine tool 20.
* Conversion source work machine information input area 103 for inputting various information related to the conversion source NC machine tool 20.
* Conversion source toolset designation area 104 for selecting and designating the toolset to be used in the work process according to the conversion source NC program in the conversion source NC machine tool 20.
* Conversion source tool information input areas 105, 106, and 107 for inputting information related to each tool included in the toolset.

The conversion result environment area 100C includes the following.
* Conversion result work machine designation area 110 for selecting and designating the work machine ID and configuration information of the conversion result NC machine tool 20.
* Conversion result work machine information input area 111 for inputting various information related to the conversion result NC machine tool 20.
* Conversion result toolset designation area 112 for selecting and designating a toolset to be used in the work process according to the conversion result NC program in the conversion result NC machine tool 20.
* Conversion result tool information input areas 113, 114, and 115 for inputting information related to each tool included in the toolset.
* Conversion start button 120 that accepts the start of the conversion process from the conversion source NC program to the conversion result NC program.

The above division of areas is an example. For example, the file name input area 101 may be regarded as a part of the pre-conversion environment together with the toolset TL in the conversion source environment and may be included in the pre-processing environment area 100B, or conversely, may be collectively included in the processing information 100A. In the drawing, the area for inputting or displaying the above-mentioned "workpiece W information", "other pre-conversion environment information", and "other conversion result environment information" is not shown. However, information input may be accepted or information may be displayed by displaying the areas on the screen. The workpiece W information may be included in the area 100A. It is preferable if the information of the workpiece W has a small change in each environment. On the other hand, when the shape of the workpiece W before machining differs depending on the environment, such an input or display area may be included in the area 100B or the area 100C. As the shape data, a screen object for designating a file name in which the shape data is stored may be used as in the area 101 of Fig. 3.

The conversion source work machine information input area 103 is an area for inputting information that needs to be input by the operator (conversion source work machine required input information), for example, the above-mentioned information (a6), (a7), and (a11), and for displaying information that has already been acquired and inputting correction information.

The conversion source tool information input areas 105, 106, and 107 are areas for inputting information that needs to be input by the operator (conversion source tool request input information), for example, the above-mentioned information (b3), and (b4), and for displaying information that has already been acquired and inputting correction information. In the present embodiment, the conversion source tool information input area 105 is an input area corresponding to the tool of TL1 of the conversion source toolset designation area 104, and the conversion source tool information input area 106 is an input area corresponding to the tool of TL2 of the conversion source toolset designation area 104, and the conversion source tool information input area 107 is an input area corresponding to the tool of TL3 of the conversion source toolset designation area 104.

The conversion result work machine information input area 111 is an area for inputting information that needs to be input by the operator, for example, the above-mentioned information (a6), (a7), and (a11), and for displaying information that has already been acquired and inputting correction information.

The conversion result tool information input areas 113, 114, and 115 are areas for inputting information that needs to be input by the operator, for example, the above-mentioned information (b3) and (b4), and for displaying information that has already been acquired and inputting correction information. In the present embodiment, the conversion result tool information input area 113 is an input area corresponding to the tool of TL1 of the conversion result toolset designation area 112, and the conversion result tool information input area 114 is an input area corresponding to the tool of TL2 of the conversion result toolset designation area 112, and the conversion result tool information input area 115 is an input area corresponding to the tool of TL3 of the conversion result toolset designation area 112. The locations in the conversion result tool information input areas 113, 114, and 115 indicate the location information (slot number) of the tool magazine 25 in which each tool should be placed, but the slot number in which each tool is placed may be set in advance to be the same as the slot number in which the same or similar tools are placed in the conversion result tool information input areas 113, 114, and 115. As the slot number for arranging each tool, the operator may input any slot number. Here, it is necessary to appropriately arrange the corresponding tool in the slot of the input slot number.

In the conversion input screen 100, a pull-down button 130 for displaying selection candidates is arranged in the conversion source work machine information input area 103, the conversion source toolset designation area 104, the conversion result work machine designation area 110, the conversion result toolset designation area 112, and the like, and when the pull-down button 130 is pressed, selection candidates in the corresponding area are displayed to be selectable.

An alert symbol 131 is displayed on the conversion input screen 100 when there is no input in the area where input is required or when the displayed information is information acquired before a predetermined period from the present time. According to the alert symbol 131, the operator can understand that the information is insufficient or out of date and that the operator needs to input necessary information or take additional measurements.

As partially described in the above description, the user of the screen does not have to input text in the pre-conversion environment area 100B and the conversion result environment area 100C each time conversion is performed. For example, the information stored in the storage resource 14 by the conversion use computer 10 may be stored in advance before the display on the screen, the information stored in advance may be displayed on the screen, and the information may be selected on the user interface 13. In such a case, the display on the screen may be omitted for some information related to the pre-conversion environment or the conversion result environment. However, the alert symbol 131 may be displayed in the vicinity of the text displayed inside the areas 102, 104, 110, and 112 (for example, next to the text) to suggest that the information belonging to the work machine or toolset is insufficient or out of date. Based on such a suggestion, the user of the screen can confirm that the items selected before the start of conversion cannot be converted, or even if the items are converted, the precision in working after conversion may decrease, and thus, the present embodiment is more suitable when the conversion process takes time.

Next, the download confirmation screen 200 displayed by the conversion program 1411 will be described in detail.

### <Download Confirmation Screen>

Fig. 4 is a configuration diagram of a download confirmation screen according to an embodiment.

The download confirmation screen 200 includes a conversion history ID display area 201 that displays a conversion history ID that identifies the executed conversion process, a conversion result work machine information display area 202 that displays the work machine ID and configuration information of the conversion result NC machine tool 20, a conversion result toolset display area 203 that displays the toolset ID of the toolset used in the conversion result NC machine tool 20 and the model number of the tool constituting the toolset, a tool arrangement position display area 204 that displays the arrangement location information (slot number) of each tool in the tool magazine 25 of the conversion result NC machine tool 20, and a download button 210 that accepts an instruction to cause the NC controller 21 of the NC machine tool 20 or the on-site use computer 30 at the conversion result place to download the conversion result NC program 1425.

According to the download confirmation screen 200, the arrangement location information (slot number) of each tool in the tool magazine 25 of the conversion result NC machine tool 20 is displayed, and thus, it is possible to appropriately prevent the tool TL to be used by the operator from being placed in the wrong slot in the tool magazine 25.

Here, to explain in line with a specific situation, in the work process, different tools may be used in a plurality of processes such as roughing, semi-finishing, finishing, and the like. Here, as partially explained, the NC program describes the location information (slot number) of the tool magazine 25 accommodating the tools used in each process. Which tool is to be placed in which slot in the tool magazine 25 can be arbitrarily determined in each NC machine tool 20. Therefore, it is possible that tools for performing the same process between the conversion source NC machine tool 20 and the conversion result NC machine tool 20 are arranged in slots having different numbers in the tool magazine 25. For example, if the conversion result NC program where the conversion process was performed is used as it is assuming that the slots in the tool magazine 25 of the tool used in the same process in the conversion source and the conversion result have the same number, and thus different types of tools are accommodated in the slots having the same number, there is a concern that completely different tools are used, which may damage the workpiece W or the tool TL. In particular, in a busy season or the like, misplacement of tools is likely to occur and there is a high possibility that such a situation will occur.

On the other hand, as described above, according to the download confirmation screen 200, the slot number of each tool in the tool magazine 25 of the conversion result NC machine tool 20 is displayed, so that it is possible to prompt the operator to check whether the tool TL to be used has not been placed in the wrong slot, and it is possible to reduce the situation where the tool TL is placed in the wrong slot.

A download screen such as the screen may be integrated with the screen of Fig. 3 described above. However, when the conversion process takes time, it is preferable that the download screen shown in Fig. 4 can be provided separately from the conversion start button screen shown in Fig. 3. It is because, after starting the conversion process, the screen user can close the screen and perform another work. The advantages of dividing the other screens are as described in the present embodiment.

Next, the processing operation by the conversion use computer 10 will be described.

(Process 1) The configuration information acquisition program 1412 (strictly speaking, the CPU 11 that executes the configuration information acquisition program 1412) acquires various information related to the NC machine tool 20 that can be acquired (for example, (a1), (a2), (a4), (a5), (a8), (a9), and (a10)) from the NC controller 21 of each NC machine tool 20 connected via the network 40. The process does not have to be performed every time when process 2 and subsequent processes described below are performed.

(Process 2) Next, the configuration information acquisition program 1412 displays the conversion input screen 100 (see Fig. 3) and accepts the following designation via the conversion input screen 100.
* Designation of the conversion source NC program 1424 to be converted.
* Designation of information (work machine ID) that identifies the NC machine tool 20 (conversion source NC machine tool) that has performed the work process on the workpiece W by the conversion source NC program 1424.
* Designation of information (toolset ID) that identifies the toolset used in the work process by the conversion source NC program 1424.
* Designation of information (work machine ID)that identifies the NC machine tool (conversion result NC machine tool 20) that newly performs cutting of the workpiece W by the conversion result NC program 1425 converted from the conversion source NC program 1424.
* Designation of information (toolset ID) that identifies the toolset used in the conversion result NC machine tool 20.

At the same time, the configuration information acquisition program 1412 accepts input (direct input or selection input) of various information related to the conversion source NC machine tool 20 and the conversion result NC machine tool 20 ((a3), (a6), (a7), and (a11)), and information related to the toolset 50 used in the conversion source NC machine tool 20 and the toolset 50 to be used in the conversion result NC machine tool 20 (information of (b1) to (b4)).

(Process 3) When the conversion start button 120 is pressed, the configuration information acquisition program 1412 transmits a conversion start instruction to the conversion program 1411. Here, the conversion start instruction includes various information input (direct input or selection input) to the conversion input screen 100.

(Process 4) Upon receiving the conversion start instruction, the conversion program 1411 reads the designated conversion source NC program 1424 (pre-correction NC program), converts the conversion source NC program 1424 into the conversion result NC program 1425 (post-correction NC program) based on the information included in the conversion start instruction (at least the conversion result NC machine tool 20, or the information related to the rigidity of the toolset to be used in the conversion result NC machine tool 20), and stores the conversion result NC program 1425 in the storage resource 14.

(Process 5) Next, the conversion program 1411 displays the download confirmation screen 200 (see Fig. 4). As an alternative to automatically displaying the download confirmation screen 200 after the completion of the process 4, the download confirmation screen 200 may be displayed in response to the operation on the computer by the user of the on-site use computer 30. After that, when the download button 210 is pressed, the conversion program 1411 transmits the conversion result NC program 1425 to the on-site use computer 30 at the place where the NC controller 21 of the conversion result NC machine tool 20 or the conversion result NC machine tool 20 is located.

For example, when the conversion result NC program 1425 is to be transmitted to the NC controller 21, the conversion result NC program 1425 received by the NC controller 21 is stored, and the conversion result NC program 1425 becomes executable in the subsequent work processes. On the other hand, when the conversion result NC program 1425 is to be transmitted to the on-site use computer 30, the on-site use computer 30 stores the conversion result NC program 1425. After that, by storing the conversion result NC program 1425 of the on-site use computer 30 in the NC controller 21 via the network 40 or via a recording medium or the like, the conversion result NC program 1425 becomes executable in the NC controller 21.

### <Specific Example of Conversion Process by Conversion Program>

Next, a specific example of the processing operation by the conversion use computer 10 will be described.

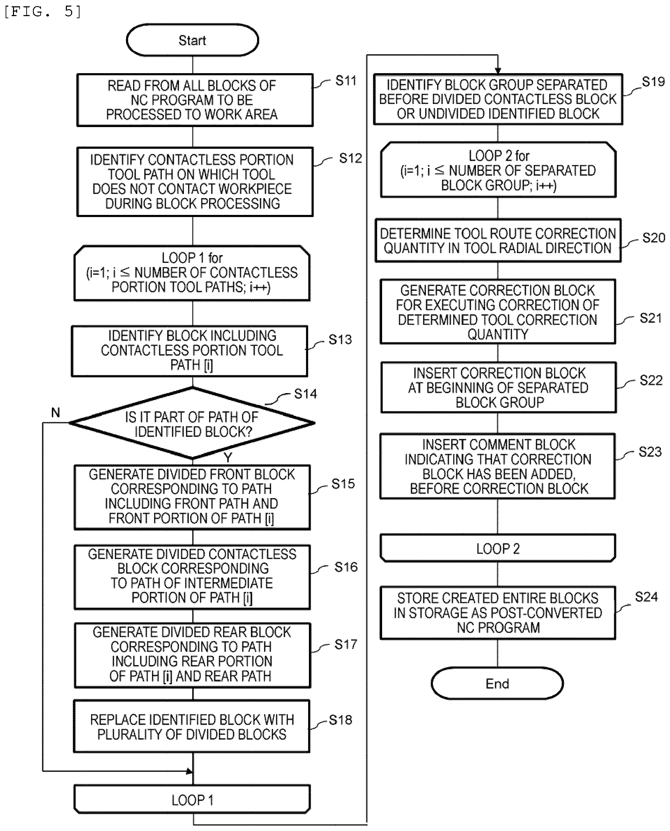

Fig. 5 is a flowchart of the conversion process according to an embodiment.

First, the conversion program 1411 reads all the blocks of the conversion source NC program 1424 to be processed with respect to the work area of the memory in the storage resource 14 (S11). Here, the block indicates a description portion including a command (address) that can be instructed to the NC machine tool 20 at one time in the work process executed by the conversion source NC program 1424. The block contains one or more commands (addresses) that can be instructed at the same time. Some addresses include, for example, a code indicating the type of command and parameters related to the content of the command. If the capacity of the conversion source program 1424 is large and all the blocks cannot be called in the work area of the memory, the blocks to be read may be switched according to the progress of the process.

Next, the conversion program 1411 identifies, based on the read block, one or more paths (referred to as contactless portion tool paths) on which the tool does not come into contact with the workpiece during the process (block process) based on the command indicated by the block (S12). Whether the tool does not come into contact with the workpiece can be identified by simulating the work process based on the shape of the workpiece to be machined and the moving path of the tool in the block. Here, all the contactless portion tool paths of the conversion source program 1424 may be identified, or only some contactless portion tool paths may be identified. When the code in the block is positioning "G00" (JIS B 6314), it basically means that the tool is not in contact with the workpiece, so with respect to the path of the block, it may be determined that the entire path of the block is a contactless portion tool path without further process.

Next, the conversion program 1411 performs the processing of a loop 1 (S13 to S18) for each of the contactless portion tool paths identified in step S12. In the loop 1, the initial value of the variable i is 1, and the condition for continuing the processing of the loop 1 is that the variable i is equal to or less than the number of contactless portion tool paths identified in S12, and the variable i is incremented by 1 each time the loop is performed.

In the processing of loop 1, first, the conversion program 1411 identifies a block (referred to as an identified block) including the contactless portion tool path [i] to be processed (the i-th path among the identified contactless portion tool paths) (S13).

Next, the conversion program 1411 determines whether the contactless portion tool path [i] is a part of the path of the identified block (S14). As a result, when the contactless portion tool path [i] is not a part of the path of the identified block, that is, when the entire path of the identified block is the contactless portion tool path [i] and the identified block is a contactless block (S14: N), the conversion program 1411 ends the process for the contactless portion tool path [i] without executing the processes of steps S15 to S18.

On the other hand, when the contactless portion tool path [i] is a part of the path of the identified block (S14: Y), the conversion program 1411 executes the process (for example, steps S15 to S17) of dividing the identified block into blocks including a block (for example, a divided contactless block) having at least a part of the contactless portion tool path [i] as a path.

For example, when the paths of the identified block are a path where the tool comes into contact with the workpiece (contact path), a contactless portion tool path [i], and a contact path in order from the front, the conversion program 1411 generates a block (divided front block) corresponding to the path including the front contact path and the front portion of the contactless portion tool path [i] (S15), generates a block (divided contactless block: divided intermediate block) corresponding to the path only for the intermediate portion of the contactless portion tool path [i] (S16), and generates a block (divided rear block) corresponding to the path including the rear portion of the contactless portion tool path [i] and the rear contact path (S17).

When the paths of the identified block are a contact path and a contactless portion tool path [i] in order from the front, the conversion program 1411 generates a block (divided front block) corresponding to the path including the contact path and the front portion of the contactless portion tool path [i], and a block (divided contactless block) corresponding to the path of the remaining portion of the contactless portion tool path [i]. When the paths of the identified block are a contactless portion tool path [i] and a contact path in order from the front, the conversion program 1411 generates a block (divided contactless block) corresponding to the path only for the front portion of the contactless portion tool path [i], and a block (divided rear block) corresponding to the path including the rear portion (remaining portion) of the contactless portion tool path [i] and the rear contact path. When there are a plurality of contactless portion tool paths in the identified block, the same process is performed for each contactless portion tool path by repeating the processing of the loop 1.

After the process of dividing the identified block is performed (for example, after the execution of S15 to S17), the conversion program 1411 replaces the identified block of the work area of the memory with a plurality of blocks generated by the dividing process (for example, the divided front block, the divided contactless block, and the divided rear block) (S18).

After that, when the variable i exceeds the number of contactless portion tool paths identified in S12, that is, when the processing of the loop 1 is executed for all of the identified contactless portion tool paths, the conversion program 1411 exits the loop 1 and advances the process to step S19.

In step S19, the conversion program 1411 separates the entire NC program being processed before the contactless block (contactless block or divided contactless block) to identify a plurality of block groups (separated block groups) .

Next, the conversion program 1411 performs the processing of a loop 2 (S20 to S23) for each of the separated block groups identified in step S19. In the loop 2, the initial value of the variable i is 1, and the condition for continuing the processing of the loop 2 is that the variable i is equal to or less than the number of the separated block groups identified in S19, and the variable i is incremented by 1 each time the loop 1 is performed.

In the processing of the loop 2, first, the conversion program 1411 determines the tool route correction quantity in the tool radial direction of the tool to be used based on the spindle rigidity and the tool rigidity of the conversion result NC machine tool 20 related to the work process in the separated block group [i] to be processed (the i-th block group of the identified separated block group) (S20). Here, as a method of determining the tool route correction quantity in the tool radial direction, the calculation may be performed in S20 based on the spindle rigidity and the tool rigidity of the conversion result NC machine tool 20, or the tool route correction quantity calculated in advance may be identified based on the spindle rigidity and the tool rigidity of the conversion result NC machine tool 20. When the deflection amount of the tool during the cutting in the separated block group changes, the tool route correction quantity may be a tool route correction quantity corresponding to the maximum deflection amount, may be a tool route correction quantity corresponding to the minimum deflection amount, or may be a tool route correction quantity corresponding to an average deflection amount.

Next, the conversion program 1411 generates a block (correction block) including an address for causing the conversion result NC machine tool 20 to execute the route correction of the determined tool route correction quantity (S21). Here, when the correction block is executed in the NC machine tool 20, for example, the correction block may be a parameter different from the tool shape parameter on the memory in the NC machine tool 20 and may be used as a block for changing the value of a parameter on the memory that affects a tool diameter compensation address (for example, G41, G42 (JIS B 6314)). Here, the tool shape parameter is a parameter that is referred to as a standard when using the tool diameter compensation address and may be manually set by the user, for example. If the tool shape parameter is changed, the manually set value cannot be used and a problem may occur when executing another NC program on the NC machine tool 20. On the other hand, as described above, the correction block can appropriately prevent the occurrence of such a problem by changing a parameter different from the tool shape parameter. As such, since the correction block is a notation that designates a parameter different from the tool shape parameter, the user who uses the post-correction NC program can easily visually recognize and grasp the correction block and the tool route correction quantity by the correction block can be easily grasped.

Next, the conversion program 1411 inserts the generated correction block at the beginning of the separated block group, that is, before the contactless block (S22). A block for correction may be created by including the address in which the conversion result NC machine tool 20 executes the route correction by the determined tool route correction quantity in the contactless block without creating a new correction block and without inserting the correction block before the contactless block.

Next, the conversion program 1411 inserts a comment block indicating that the correction block has been added, before the correction block (comment block) (S23).

After that, when the variable i exceeds the number of the separated block groups identified in S19, that is, when the processing of the loop 2 is executed for all of the identified separated block groups, the conversion program 1411 exits the loop 2 and advances the process to step S24.

In step S24, the conversion program 1411 stores all the created blocks in the work area, as the post-conversion NC program (conversion result NC program 1425), in the storage of the storage resource 14.

Next, the conversion process of the conversion source NC program that performs the work process for the specific workpiece will be described.

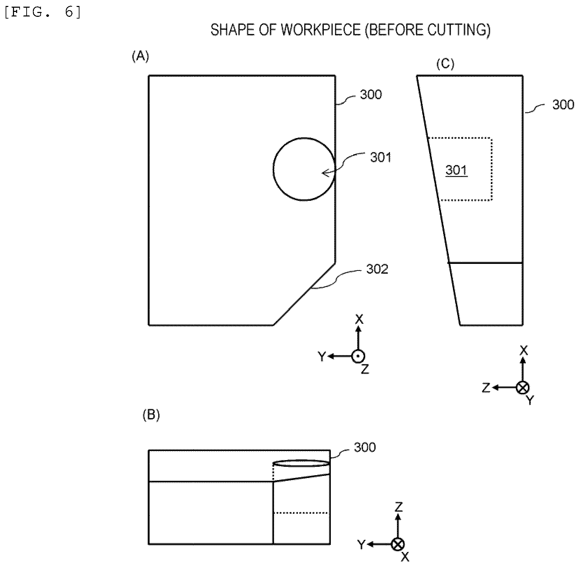

Fig. 6 is a diagram showing a shape of a workpiece before the cutting according to an embodiment. Fig. 6A shows a top view (XY plan view), Fig. 6B shows a side view (YZ plan view), and Fig. 6C shows a side view (XZ plan view).

Before cutting, the workpiece 300 has a notch 302 partially formed and has a substantially rectangular shape when viewed from above. An opening 301 having a columnar hole extending in the Z-axis direction is formed on the negative direction (right direction in Fig. 6A) side of the workpiece 300 on the Y-axis. The height of the workpiece 300 increases along the positive direction of the X-axis.

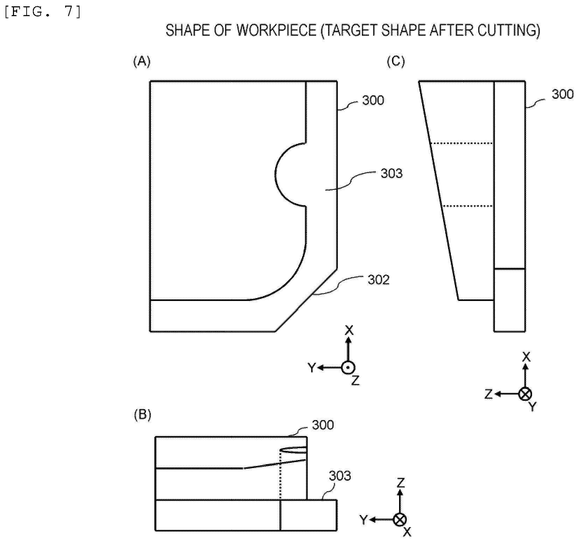

Fig. 7 is a diagram showing a target shape of a workpiece after the cutting according to the embodiment. Fig. 7A shows a top view (XY plan view), Fig. 7B shows a side view (YZ plan view), and Fig. 7C shows a side view (XZ plan view).

The target shape of the workpiece 300 after the cutting is such that a stepped unit 303 is formed to be continuous in the vicinity of the negative side of the X-axis and the vicinity of the negative side of the Y-axis with respect to the workpiece 300 before cutting.

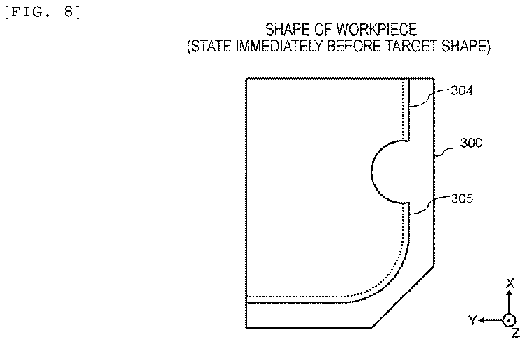

Fig. 8 is a diagram showing a shape of a workpiece during the cutting according to the embodiment. Fig. 8 shows the shape of the workpiece immediately before reaching the target shape shown in Fig. 7. The dotted line in the drawing indicates the target shape.

As shown in Fig. 8, in the workpiece 300 before reaching the target shape, the final cutting portions 304 and 305 to be cut last remain.

Next, a description of an NC program for executing a cutting process (final cutting process) for cutting the final cutting portions 304 and 305 from the state of the workpiece 300 shown in Fig. 8 will be described.

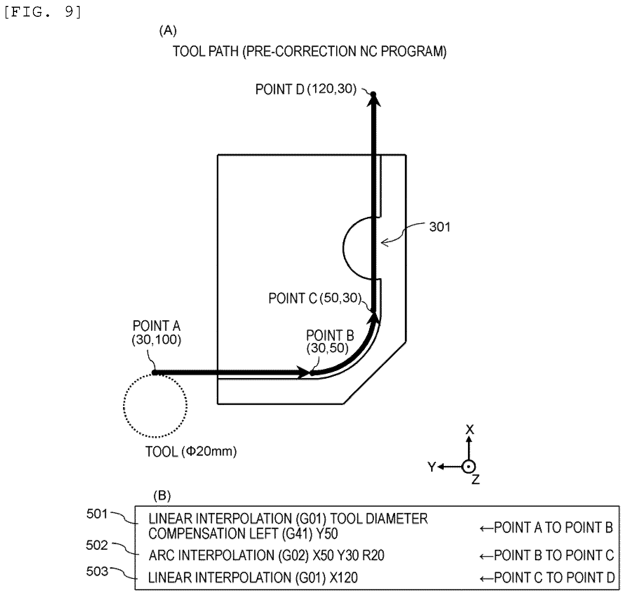

Fig. 9 is a diagram illustrating a description of the pre-correction NC program and a tool path in the cutting process of the corresponding workpiece according to an embodiment. Fig. 9A shows a tool path in the final cutting process, and Fig. 9B shows a description of a portion corresponding to the final cutting process of the pre-correction NC program.

The pre-correction NC program includes a block 501 for linearly moving the tool from point A shown in Fig. 9A to point B to cut, a block 502 for moving the tool from point B to point C in an arc shape to cut, and a block 503 for linearly moving the tool from point C to point D to cut.

In the case of moving the tool from point C to point D, when the tool starts moving from point C, the thickness (height) of the cutting portion gradually increases, and thus, the cutting resistance applied to the tool gradually increases. After that, in the portion corresponding to the opening 301, the tool and the workpiece do not come into contact with each other, and thus, the cutting resistance is eliminated. After that, when the tool passes through the portion corresponding to the opening 301, the tool comes into contact with the workpiece again, and the thickness of the cutting portion further increases, and thus, the cutting resistance further increases.

According to the pre-correction NC program, in the block 503 in which the tool is linearly moved from point C to point D to cut, the tool width correction quantity is always the same, and thus, the cutting amount differs between the side close to point C and the side close to point D, which have the different cutting resistances, and thus, deviates from the target shape and reduces the cutting precision.

Next, the conversion process for converting the pre-correction NC program for executing the cutting process (final cutting process) for cutting the final cutting portions 304 and 305 from the state of the workpiece 300 shown in Fig. 8, and the post-correction NC program will be described.

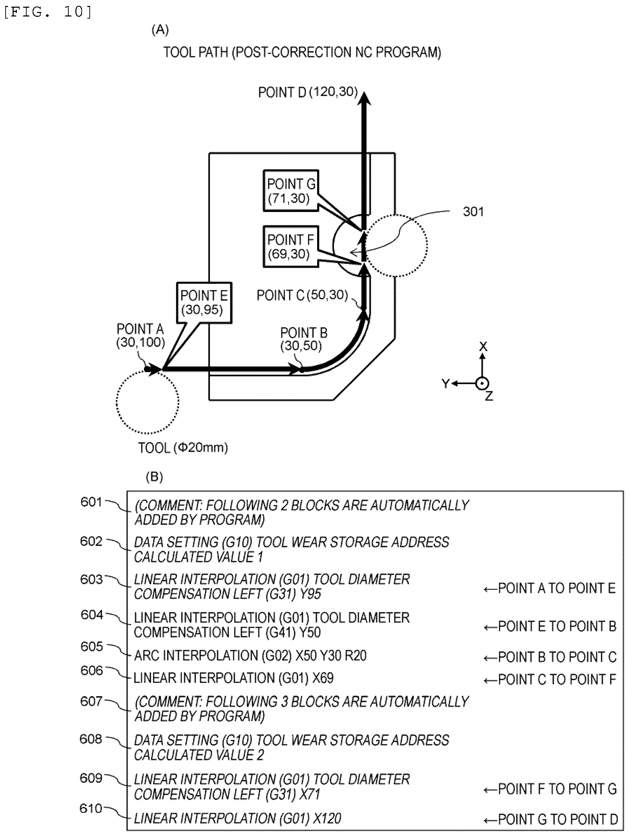

Fig. 10 is a diagram illustrating a description of the post-correction NC program and a tool path in the cutting process of the corresponding workpiece according to an embodiment. Fig. 10A shows a tool path in the final cutting process, and Fig. 10B shows a description of a portion corresponding to the final cutting process of the post-correction NC program. In Fig. 10B, additions and changes from the pre-correction NC program are shown in bold and italics. In the following description, the contents of Figs. 5 and 9 will be referred to as appropriate.

In step S12 of the conversion process shown in Fig. 5, as a contactless portion tool path, a portion from point A to the contact with the workpiece 300 and a portion corresponding to the opening 301 are detected.

In the processing of the loop 1, the block 501 is identified as an identified block for the contactless portion tool path from point A to the contact with the workpiece 300, and a block 603 corresponding to the path (point A to point E) in the front of the contactless portion tool path and a block 604 corresponding to the path (point E to point B) including a path at the rear of the contactless portion tool path and a path in which the tool comes into contact with the workpiece are generated and replace the block 501. Since the block does not include information on the start point, the block 604 is the same as the block 501 as a description.

In the processing of the loop 1, the block 503 is identified as an identified block for the contactless portion tool path of the portion corresponding to the opening 301, and a block 606 corresponding to the path where the tool comes into contact with the workpiece and the path (point C to point F) in the front of the contactless portion tool path, a block 609 corresponding to the path (point F to point G) only in the middle of the contactless portion tool path, and a block 610 corresponding to the path (point G to point D) including the path at the rear of the contactless portion tool path and the path where the tool comes into contact with the workpiece are generated and replace the block 503.

After that, in step S19, the block 603, which is a contactless block, and the block group (separated block group) separated before the block 609 are identified. That is, the blocks 603 to 606, and the blocks 609 and 610 are identified as separated block groups.

In the loop 2, the tool route correction quantity (calculated value 1 in the drawing) corresponding to the work process up to point B is determined for the separated block group of the blocks 603 to 606, a block 602 (correction block) performing the correction by the tool route correction quantity is inserted before the block 603, and a comment block 601 (comment block) indicating that the correction block has been inserted before the block 602 is inserted. With such configuration, since the block 602 that performs the correction is executed before the block 603 in which the tool does not come into contact with the workpiece, it is possible to prevent the tool route from being corrected during the cutting and it is possible to appropriately prevent the occurrence of differences in levels on the workpiece caused by the correction during the cutting.

In the loop 2, the tool route correction quantity (calculated value 2 in the drawing) corresponding to the work process from point G to point D is determined for the separated block group of the block 609 and the block 610, a block 608 (correction block) performing the correction of the tool route correction quantity is inserted before the block 609, and a comment block 607 (comment block) indicating that the correction block has been inserted is inserted before the block 608. With such configuration, since the block 608 that performs the correction is executed before the block 609 in which the tool does not come into contact with the workpiece, it is possible to prevent the tool route from being corrected during the cutting and it is possible to appropriately prevent the occurrence of differences in levels on the workpiece caused by the correction during the cutting. According to the process, in the pre-correction NC program, it is possible to create an NC program that can appropriately correct the tool route for a part of the cutting process in the cutting process that was regarded as one block. Therefore, in the cutting process, the route can be corrected in more detail and the cutting precision of the workpiece is improved.

The blocks 601 to 610 created in the way serve as a portion of the changed NC program corresponding to the blocks 501 to 503 of the pre-correction NC program.

According to the changed NC program, the tool diameter compensation quantity suitable for the cutting process from point E to point B is corrected between point A and point E, and the cutting process between point E and point B can be executed with appropriate precision. The tool diameter compensation quantity suitable for the cutting process from point G to point D is corrected between point F and point G, and the cutting process between point G and point D can be executed with appropriate precision. Thereby, the cutting precision for the workpiece can be improved.

### <Actions and Effects>

According to the above processing, since the conversion source NC program tuned for the conversion source NC machine tool 20 is converted into the conversion result NC program in consideration of at least the information related to the rigidity of the conversion result NC machine tool 20, it is possible to improve the precision in working in the work process in the conversion result NC machine tool 20. According to the above-mentioned processing, it is possible to correct the tool route correction quantity suitable for the cutting process. Since it is possible to prevent the correction from being performed during the cutting, it is possible to appropriately prevent the occurrence of differences in levels caused by the correction during the cutting of the workpiece. Since one block is divided or a correction block is added by using a block of the pre-correction NC program, the tool route correction quantity can be corrected while effectively using the description of the pre-correction NC program. Thus, the user who has read the pre-correction NC program can easily understand the post-correction NC program. Since a comment indicating the converted portion is added to the post-correction NC program, it is possible to facilitate for the user to understand the post-correction NC program.

### <Variation>

The processes described below may be used in combination.

### <<Filtering Process of Conversion Result Environment>>

In the filtering process by the configuration information acquisition program 1412, the following processes may be performed.
* Candidates for conversion result NC machine tools (setting candidates or selection candidates for the conversion result work machine designation area 110)

For example, as a candidate NC machine tool that is set as a conversion result NC machine tool or narrowed down as a selection candidate, another NC machine tool 20 that includes all the functions of the conversion source NC machine tool 20 may be used. Specifically, for example, when the conversion source NC machine tool 20 is a milling machine or a drilling machine, the candidate NC machine tool may be used as a machining center. When the conversion source NC machine tool is a 3-axis machining center, the candidate NC machine tool may be a 5-axis machining center.

As a candidate NC machine tool that is set as a conversion result NC machine tool or narrowed down as a selection candidate, an NC machine tool capable of executing all the processing steps described in the conversion source NC program 1424 may be used. For example, even if the conversion source NC machine tool is a 5-axis machining center, if all the processing steps described in the conversion source CN program 1424 can be executed by a 3-axis machining center, the candidate NC machine tool may be used as a 3-axis machining center.

The NC machine tool 20 that can be mounted with a smaller number of tools than the number of tools used in the conversion source NC program 1424 may be excluded from the candidate NC machine tools.
* Toolset candidates (setting candidates or selection candidates for the conversion result toolset designation area 112)

When simplifying the conversion process of the NC program, as a conversion result toolset candidate, a toolset having the same number of tools as the conversion source toolset may be used. From the viewpoint of precision in working, it may be preferable to use the same number of tools as the conversion source toolset as a candidate. It is because when the conversion source uses, for example, three tools to perform the conversion in the number and order of processes such as the roughing process, the intermediate processing, and the finishing process, it is difficult to obtain the same precision in working as the conversion source even if two tools are used in the number and order of processes such as the roughing process and finishing process. Such a use may be stored for each tool T and a toolset including all uses of the tool TL included in the conversion source toolset may be used as a candidate.

As a candidate for the conversion result toolset, a toolset including tools of the same type as each tool of the conversion source toolset may be used. Here, the same type may have the same use.

The toolset including the tool for which the necessary information has not been acquired in advance may be excluded from the candidates of the conversion result toolset.

### <<Slot Number Conversion Process Based on Use Information of Tool TL>>

As one method for simplifying the conversion process by the conversion program 1411, the operator using the screen of Fig. 3 may set an operator's input rule that the same slot number is input for the tool of the conversion result environment having the same use as the tool TL of the pre-conversion environment, for the tools TL included in the toolset of the conversion result environment. Such a rule may not be followed due to the operator's mistakes. As a countermeasure, the problem may be solved by allowing the configuration information acquisition program 1412 to accept inputs of uses (for example, for roughing process, for intermediate processing, and for finishing process) for each tool TL included in the toolset, to store the inputs of uses in individual tool information 1423, and to use the information. Specifically, the program reads the correspondence between the use of the tool TL included in the toolset of the selected conversion source environment and the slot number(referred to as correspondence 1), and the use of the tool TL included in the toolset of the selected conversion result environment(conversion result tool use), searches for the correspondence 1 having the same use as the conversion result tool use, and sets the slot number of the correspondence 1 as the slot number of the conversion result toolset.

### <<Introduction of Temporary Slot Number Conversion Process>>

In the above-described embodiment, the conversion process is performed by the conversion program 1411 after determining which tool TL is possible for which slot number in the conversion result environment. However, considering the machining efficiency in the conversion result environment, it may be desired to dynamically determine the slot for storing each tool after the conversion process. For example, it is the case where since the conversion process may take a long time (for example, one day), the immediate start of conversion is desired, but since other machining work in the conversion result environment are also dynamically converted, the relationship between the slot number and tool TL cannot be determined at the start of conversion.

As a countermeasure, a process (referred to as a temporary slot number conversion process) may be performed in which the slot number of each tool input or selected on the screen of Fig. 3 is regarded as a temporary slot number, the conversion process is performed by the conversion program 1411 and then the temporary slot number is converted to the actual slot number. In the following description, a program that performs the temporary slot conversion process may be referred to as a temporary slot conversion program. The temporary slot number conversion process may be performed immediately before the download is started by pressing the download button 210 on the download screen of Fig. 4 or may be executed by another program on the on-site use computer 30 after the download. The information required for executing the temporary slot number conversion process, that is, the conversion information between the temporary slot number and the actual slot number (slot number conversion information) is stored in the conversion use computer 10 or the on-site use computer 30 by the operator's input before the execution of the temporary slot number conversion process and after the execution of the conversion process by the conversion program 1411. The temporary slot number is preferably a numeral but may be another identifier. Since the introduction of the temporary slot number conversion process can target the execution timing of the high-load or long-time process by the conversion program 1411 even before determining which tool TL to be stored in each slot, as a result, it can be said that it is possible to effectively use the computer resources of the conversion use computer 10.

The temporary slot number assigned to the tool TL in the toolset selected as the conversion result environment may be determined as follows before the conversion process is started by the conversion program 1411. In either case, the relationship between the determined tool TL and the temporary slot number is stored in the individual tool information and referred to during the slot number conversion process.
* Arrangement order of tools TL in the selected toolset. The arrangement order may be a display order, a data storage order, or an order based on the process, but may be other.
* Assigned by the above-mentioned "slot number conversion process based on the use information of the tool TL" .

To input the slot number conversion information, it is only required to simply input the relationship between the temporary slot number and the actual slot number into the computer, but it is difficult to input in a situation where it is not known which tool TL the temporary slot number is intended for. Therefore, on the conversion information input screen, the information of the tool TL to which the temporary slot number is assigned may be displayed together on the conversion information input screen.

### <<Other Usage Pattern 1 of On-Site Use Computer>>

In the above embodiment, an example in which the conversion input screen 100 and the download confirmation screen 200 are displayed on the user interface 13 of the conversion use computer 10 to accept the input has been described, but the present invention is not limited thereto. The conversion input screen 100 and the download confirmation screen 200 may be displayed on one of the on-site use computers 30 to accept the input and may be displayed on the on-site use computer 30, for example, at the place where the conversion result NC machine tool 20 is located to accept the input. A part of the conversion input screen 100 may be displayed on the on-site use computer 30 at the place where the conversion source NC machine tool 20 is located to accept the input, and the remaining part of the conversion input screen 100 may be displayed on the on-site use computer 30 at the place where the conversion result NC machine tool 20 is located to accept the input.

### <<Other Conversion Process 1 by Conversion Program>>

The following may be performed as a process of converting the conversion source NC program 1424 into the conversion result NC program 1425.
* (Step A1) A simulation of a physical phenomenon during machining is performed using the information on the conversion result environment and workpiece W information, and the shape of the workpiece W to be machined is predicted. The information of the conversion source environment may be used in the simulation. The simulation may be performed by a program other than the conversion program 1411.
* (Step A2) Calculation of errors based on the comparison between the predicted shape of the workpiece W and the target shape of the workpiece W.
* (Step A3) The description (the tool diameter compensation, tool length compensation, tool wear compensation, feed rate, cutting speed, and the like) to eliminate the error is added to or changed in the conversion source NC program 1424 and stored as the conversion result NC program 1425.

### <<Other Conversion Process 2 by Conversion Program>>

The following may be performed as a process of converting the conversion source NC program 1424 into the conversion result NC program 1425. The following steps may be combined with the above steps A1 to A3.
* (Step B1) The information of the conversion result environment, the workpiece W information, the information of the conversion source environment, and the target shape of the workpiece W are input into the artificial intelligence program and acquires the error. The conversion source NC program in the conversion source environment may be used as the educational data of the artificial intelligence program, or the processed shape of the workpiece W after machining and the target shape may be input in advance together with the information of the conversion source environment. As another educational data, the processed shape after machining of the workpiece W by the NC program other than the conversion result NC program of the conversion result environment and the target shape may be input in advance together with the information of the conversion result environment. The artificial intelligence program may be performed by a program other than the conversion program 1411.
* (Step B2) The description (the tool diameter compensation, tool length compensation, tool wear compensation, feed rate, cutting speed, and the like) to eliminate the error is added to or stored in the conversion source NC program 1424 and stored as the conversion result NC program 1425.

### <<Division of Screens According to Work Range of Operator >>

When the place A and the place B are relatively far from each other as shown in Fig. 1, it is conceivable that different operators are assigned to each place as shown in Fig. 1. Here, it is conceivable that each operator is in charge of the machining by the conversion source environment or conversion result environment included in the place where each operator is placed, the measurement of information on the conversion result environment, and information on the conversion source environment described in Figs. 2 to 4, and the input to the conversion use computer. As a screen suitable for such a case, Figs. 3 and 4 may be divided as follows. In the following description, a part of the explanation is based on the screen, but it is actually achieved by executing the program executed by each on-site use computer on the CPU.

### <<<Work Computer in Conversion Source Environment>>>

It is conceivable that the work computer 30 in the conversion source environment displays the areas 100A (at least NC program name 101) and 100B in Fig. 3. It is because the information to be input in the areas is information obtained in the relative conversion source environment, so it is efficient to have the operator in the conversion source environment input the information. However, it is not necessary to display all the input areas included in the areas 100A and 100B of Fig. 3. The information input by the work computer in the pre-conversion environment is stored in the conversion use computer 10 with a predetermined identifier (hereinafter, may be referred to as a library name). The inputs are also useful as the information that can be processed with the intended error in the pre-conversion environment.

### <<<Work Computer in Conversion Result Environment>>>

It is conceivable that the work computer in the conversion result environment displays the area 100C of Fig. 3. It is because the information to be input in these areas is information obtained in the relative conversion result environment, so it is efficient to have the operator in the conversion result environment input the information. In order to recall the contents input by the work computer 30 in the conversion source environment, the screen of the work computer in the conversion result environment includes an area for designating a library name described above. By doing so, the input in the conversion source environment can be appropriately identified, and the information required for the conversion process by the conversion program 1411 can be identified. However, the information of the conversion source environment is unknown only by the library name, and it is difficult to input the appropriate conversion result environment. Therefore, on the screen of the work computer in the conversion result environment, the input information corresponding to the library name may be displayed after the library name is designated.

As described above, an example of displaying the conversion source environment and the conversion result environment on the on-site use computer has been described. According to the example, an operator in the conversion source environment can create a conversion result NC program 1425 that can be executed in a plurality of conversion result environments in spite of one input work. Even if the conversion source environment ages, the library name before the conversion over time may be designated and the environment after aging may be input as the conversion result environment.

### <<<Others>>>

In the above embodiments, a part or all of the processing performed by the CPU 11 may be performed by the hardware circuit. The program in the above embodiments may be installed from a program source. The program source may be a program distribution server or a non-volatile storage medium (for example, a portable storage medium).

In the above embodiment, the contactless portion tool path in which the tool does not come into contact with the workpiece is detected, the NC program is divided into a plurality of block groups based on the block corresponding to the contactless portion tool path, and a block for performing the tool route correction is generated before the block where the cutting of the block group is executed. For example, the NC program may be divided into a plurality of block groups based on the inflection point of the cutting resistance applied to the tool and a block for performing the tool route correction may be generated before the portion that becomes the inflection point of the cutting resistance.

In the above embodiment, a comment indicating that the correction block has been added is added. For example, if the block is divided, a difference from the description of the block division source may be added as a comment, and if a part has been changed, a comment indicating the correspondence with the state before the change may be added.

The pre-conversion NC program may be an NC program immediately after being generated from the target shape data by the CAM program and before cutting with a work machine. For the toolset here, the tool data when the NC program is generated by the CAM program may be input. In addition to the above-mentioned spindle rigidity or tool rigidity, the tool route correction quantity may be determined based on the rigidity of the workpiece W and the amount of thermal expansion during the cutting of the workpiece W (in other words, the amount of heat shrinkage after cutting).

In the above description, the machining center has been mainly described as an example of the work machine, but other work machines may be used as long as NC control is possible.

In the above description, data transmission and reception between the on-site use computer and the conversion use computer is partially omitted, but as a matter of course, data transmission and reception are performed between the on-site use computer and the conversion use computer. For example, when the conversion program 1411 is executed on the conversion use computer, and the on-site use computer displays the user interface or displays information or inputs information by the operation, the program that takes part in the processing that the configuration information acquisition program is in charge of the on-site use computer is executed on the on-site use computer. Then, the program responsible for the part transmits the input information to the conversion use computer, or the program responsible for the part receives the display information transmitted from the conversion use computer and displays the user interface.

### Reference Signs List

- 1: work process system
- 10: conversion use computer
- 11: CPU
- 12: network interface
- 13: user interface
- 14: storage resource
- 20: NC machine tool
- 21: NC controller
- 25: tool magazine
- 25a, 25b, 25c: slot
- 26: tool changer
- 30: on-site use computer
- 50: toolset
- W: workpiece
- TL: tool

## Claims

1. A numerical control, NC, program conversion processing method that converts a pre-correction numerical control, NC, program (20) and generates a post-correction numerical control, NC, program (1425), the method comprising:
based on a plurality of blocks in the pre-correction NC program (20), identifying (S12) a contactless portion tool path, which is a path on which a tool of a work machine executing the pre-correction NC program (20) does not come into contact with a workpiece (W) during the processes corresponding to the blocks; wherein the method is **characterized by** further comprising:
identifying (S13) contactless blocks, which are blocks having only the contactless portion tool path as a path;
determining (S20), for each contactless block, a tool route correction quantity in a tool radial direction in a work process of the workpiece (W) according to following blocks, which are one or more blocks, other than the contactless blocks, following a respective contactless block; wherein
the tool route correction quantity is determined based on a spindle rigidity of the work machine or a rigidity of the tool, and
creating (S21) correction blocks including descriptions correcting the tool route by the respective tool route correction quantity; inserting (S22) the correction blocks before the respective contactless blocks.

2. The NC program conversion processing method according to claim 1, further comprising:
when the contactless portion tool path is a part of a path corresponding to a first block including the contactless portion tool path, generating (S15) a divided contactless block which is a block corresponding to at least a part of the path of the contactless portion tool path, and one or more divided blocks corresponding to paths other than the path of the divided contactless block of the first block;
converting the first block into the divided contactless block and the divided block; and
treating the divided contactless block as the contactless block.

3. The NC program conversion processing method according to claim 2, further comprising:
when the contactless portion tool path is an intermediate portion in the path corresponding to the first block including the contactless portion tool path, generating a divided front block corresponding to the path including the path before the contactless portion tool path and the path in the front within the contactless portion tool path, the divided intermediate block corresponding to only the path of the intermediate portion of the contactless portion tool path corresponding to the divided contactless part block, and a divided rear block corresponding to the path including the path at the rear of the contactless portion tool path and the path behind the contactless portion tool path;
converting the first block into the divided front block, the divided intermediate block, and the divided rear block; and
treating the divided intermediate block as the contactless block.

4. The NC program conversion processing method according to claim 1, wherein
each correction block executed by the work machine includes a parameter different from a tool shape parameter on the memory of the work machine and is a block that changes a value of a parameter on the memory that affects a tool diameter compensation address.

5. The NC program conversion processing method according to claim 1, wherein
a comment block (601) that identifies a correction block is added.

6. The NC program conversion processing method according to claim 1, wherein
the tool route correction quantity is determined based on the spindle rigidity of the work machine and the rigidity of the tool.

7. A conversion use computer (10) that includes a processor (11), converts a pre-correction numerical control, NC, program (20), and generates a post-correction numerical control, NC, program (1425), wherein
the processor (11) is configured to
based on a plurality of blocks in the pre-correction NC program (20), identify a contactless portion tool path, which is a path on which a tool of a work machine executing the pre-correction NC program (20) does not come into contact with a workpiece (W) during the processes corresponding to the blocks, wherein the conversion use computer (10) is **characterized in that** the processor (11) is configured to
identify contactless blocks, which are blocks having only the contactless portion tool path as a path,
based on a spindle rigidity of the work machine or a rigidity of the tool, determine, for each contactless block, a tool route correction quantity in a tool radial direction in a work process of the workpiece (W) according to following blocks, which are one or more blocks, other than the contactless blocks, following a respective contactless block, create correction blocks including descriptions correcting the tool route by a respective tool route correction quantity and
insert the correction blocks before the respective contactless blocks.

8. The conversion use computer (10) according to claim 7, wherein
the processor (11) is configured to
when the contactless portion tool path is a part of a path corresponding to a first block including the contactless portion tool path, generate a divided contactless block which is a block corresponding to at least a part of the path of the contactless portion tool path, and one or more divided contactless blocks corresponding to paths other than the path of the divided contactless block of the first block,
convert the first block into the divided contactless block and the divided block, and
treat the divided contactless block as the contactless block.

9. The conversion use computer (10) according to claim 8, wherein
the processor (11) is configured to
when the contactless portion tool path is an intermediate portion in the path corresponding to the first block including the contactless portion tool path, generate a divided front block corresponding to the path including the path before the contactless portion tool path and the path in the front within the contactless portion tool path, the divided intermediate block corresponding to only the path of the intermediate portion of the contactless portion tool path corresponding to the divided contactless part block, and a divided rear block corresponding to the path including the path at the rear of the contactless portion tool path and the path behind the contactless portion tool path,
convert the first block into the divided front block, the divided intermediate block, and the divided rear block, and
treat the divided intermediate block as the contactless block.

10. The conversion use computer (10) according to claim 7, wherein
each correction block executed by the machine is a parameter different from a tool shape parameter on the memory of the work machine and is a block that changes a value of a parameter on the memory that affects a tool diameter compensation address.

11. The conversion use computer (10) according to claim 7, wherein
the processor (11) is configured to add a comment block (601) that identifies a correction block.

12. The conversion use computer according to claim 7, wherein
the tool route correction quantity is determined based on the spindle rigidity of the work machine and the rigidity of the tool.

## Patentansprüche

1. Verarbeitungsverfahren für eine Umsetzung eines Programms numerischer Steuerung, NC-Programms, das ein Programm numerischer Steuerung, NC-Programm, vor Korrektur (20) umsetzt und ein Programm numerischer Steuerung, NC-Programm, nach Korrektur (1425) erzeugt, wobei das Verfahren Folgendes umfasst:
anhand mehrerer Blöcke in dem NC-Programm vor Korrektur (20) Identifizieren (S12) eines Werkzeugwegs mit berührungslosem Abschnitt, der ein Weg ist, auf dem ein Werkzeug einer Arbeitsmaschine, die das NC-Programm vor Korrektur (20) ausführt, während der Prozesse, die den Blöcken entsprechen, nicht mit einem Werkstück (W) in Berührung kommt;
wobei das Verfahren **dadurch gekennzeichnet ist, dass** es ferner Folgendes umfasst:
Identifizieren (S13) berührungsloser Blöcke, die Blöcke sind, die nur den Werkzeugweg mit berührungslosem Abschnitt als einen Weg besitzen;
Bestimmen (S20) für jeden berührungslosen Block eines Werkzeugroutenkorrekturbetrags in einer zum Werkzeug radialen Richtung in einem Arbeitsprozess des Werkstücks (W) gemäß den folgenden Blöcken, die ein Block oder mehrere Blöcke sind, die von den berührungslosen Blöcken verschieden sind, und auf einen jeweiligen berührungslosen Block folgen; wobei
der Werkzeugroutenkorrekturbetrag anhand einer Spindelsteifigkeit der Arbeitsmaschine oder einer Steifigkeit des Werkzeugs bestimmt wird; und
Erzeugen (S21) von Korrekturblöcken, die Beschreibungen enthalten, die die Werkzeugroute um den jeweiligen Werkzeugkorrekturbetrag korrigieren;
Einfügen (S22) der Korrekturblöcke vor den jeweiligen berührungslosen Blöcken.

2. NC-Programmumsetzungs-Verarbeitungsverfahren nach Anspruch 1, das ferner umfasst:
dann, wenn der Werkzeugweg mit berührungslosem Abschnitt ein Teil eines Wegs ist, der einem ersten Block entspricht, der den Werkzeugweg mit berührungslosem Abschnitt enthält, Erzeugen (S15) eines geteilten berührungslosen Blocks, der ein Block ist, der zumindest einem Teil des Wegs des Werkzeugwegs mit berührungslosem Abschnitt entspricht, und eines oder mehrerer geteilter Blöcke, die Wegen entsprechen, die von dem Weg des geteilten berührungslosen Blocks des ersten Blocks verschieden sind;
Umsetzen des ersten Blocks in den geteilten berührungslosen Block und den geteilten Block; und
Behandeln des geteilten berührungslosen Blocks als den berührungslosen Block.

3. NC-Programmumsetzungs-Verarbeitungsverfahren nach Anspruch 2, das ferner umfasst:
dann, wenn der Werkzeugweg mit berührungslosem Abschnitt ein Zwischenabschnitt in dem Weg ist, der dem ersten Block entspricht, der den Werkzeugweg mit berührungslosem Abschnitt enthält, Erzeugen eines geteilten vorderen Blocks, der dem Weg, der den Weg vor dem Werkzeugweg mit berührungslosem Abschnitt enthält, und dem Weg vorne innerhalb des Werkzeugwegs mit berührungslosem Abschnitt entspricht, des geteilten Zwischenblocks, der nur dem Weg des Zwischenabschnitts des Werkzeugwegs mit berührungslosem Abschnitt entspricht, der dem geteilten Block eines berührungslosen Teils entspricht, und eines geteilten hinteren Blocks, der dem Weg entspricht, der dem Weg im hinteren Teil des Werkzeugwegs mit berührungslosem Abschnitt und dem Weg hinter dem Werkzeugweg mit berührungslosem Abschnitt entspricht;
Umsetzen des ersten Blocks in den geteilten vorderen Block, den geteilten Zwischenblock und den geteilten hinteren Block; und
Behandeln des geteilten Zwischenblocks als den berührungslosen Block.

4. NC-Programmumsetzungs-Verarbeitungsverfahren nach Anspruch 1, wobei
jeder Korrekturblock, der durch die Arbeitsmaschine ausgeführt wird, einen Parameter enthält, der von einem Werkzeugformparameter auf dem Speicher der Arbeitsmaschine verschieden ist, und ein Block ist, der einen Wert eines Parameters auf dem Speicher ändert, der eine Werkzeugdurchmesserkompensationsadresse beeinflusst.

5. NC-Programmumsetzungs-Verarbeitungsverfahren nach Anspruch 1, wobei
ein Kommentarblock (601), der einen Korrekturblock identifiziert, hinzugefügt wird.

6. NC-Programmumsetzungs-Verarbeitungsverfahren nach Anspruch 1, wobei
der Werkzeugroutenkorrekturbetrag anhand der Spindelsteifigkeit der Arbeitsmaschine und der Steifigkeit des Werkzeug bestimmt wird.

7. Computer (10) zur Verwendung für eine Umsetzung, der einen Prozessor (11) enthält, ein Programm numerischer Steuerung, NC-Programm, vor Korrektur (20) umsetzt und ein Programm numerischer Steuerung, NC-Programm, nach Korrektur (1425) erzeugt, wobei
der Prozessor (11) konfiguriert ist zum:
anhand mehrerer Blöcke in dem NC-Programm (20) vor Korrektur Identifizieren eines Werkzeugwegs mit berührungslosem Abschnitt, der ein Weg ist, auf dem ein Werkzeug einer Arbeitsmaschine, die das NC-Programm vor Korrektur (20) ausführt, während der Prozesse, die den Blöcken entsprechen, nicht mit einem Werkstück (W) in Berührung kommt, wobei der Computer (10) zur Verwendung für eine Umsetzung **dadurch gekennzeichnet ist, dass** der Prozessor (11) konfiguriert ist zum
Identifizieren berührungsloser Blöcke, die Blöcke sind, die nur den Werkzeugweg mit berührungslosem Abschnitt als einen Weg besitzen;
anhand einer Spindelsteifigkeit der Arbeitsmaschine oder einer Steifigkeit des Werkzeugs Bestimmen für jeden berührungslosen Block eines Werkzeugroutenkorrekturbetrags in einer zum Werkzeug radialen Richtung in einem Arbeitsprozess des Werkstücks (W) gemäß den folgenden Blöcken, die ein Block oder mehrere Blöcke sind, die von den berührungslosen Blöcken verschieden sind, die auf einen jeweiligen berührungslosen Block folgen,
Erzeugen von Korrekturblöcken, die Beschreibungen enthalten, die die Werkzeugroute um den jeweiligen Werkzeugkorrekturbetrag korrigieren, und
Einfügen der Korrekturblöcke vor den jeweiligen berührungslosen Blöcken.

8. Computer (10) zur Verwendung für eine Umsetzung nach Anspruch 7, wobei
der Prozessor (11) konfiguriert ist zum:
dann, wenn der Werkzeugweg mit berührungslosem Abschnitt ein Teil eines Wegs ist, der einem ersten Block entspricht, der den Werkzeugweg mit berührungslosen Teil enthält, Erzeugen eines geteilten berührungslosen Blocks, der ein Block ist, der zumindest einem Teil des Wegs des Werkzeugwegs mit berührungslosem Abschnitt entspricht, und eines oder mehrerer geteilter berührungsloser Blöcke, die Wegen entsprechen, die von dem Weg des geteilten berührungslosen Blocks des ersten Blocks verschieden sind;
Umsetzen des ersten Blocks in den geteilten berührungslosen Block und den geteilten Block und
Behandeln des geteilten berührungslosen Blocks als den berührungslosen Block.

9. Computer (10) zur Verwendung für eine Umsetzung nach Anspruch 8, wobei
der Prozessor (11) konfiguriert ist,
dann, wenn der Werkzeugweg mit berührungslosem Abschnitt ein Zwischenabschnitt in dem Weg ist, der dem ersten Block entspricht, der den Werkzeugweg mit berührungslosem Abschnitt enthält, Folgendes zu erzeugen: einen geteilten vorderen Block, der dem Weg entspricht, der den Weg vor dem Werkzeugweg mit berührungslosem Abschnitt und den Weg vorne innerhalb des Werkzeugwegs mit berührungslosem Abschnitt enthält, einen geteilten Zwischenblock, der nur dem Weg des Zwischenabschnitts des Werkzeugwegs mit berührungslosem Abschnitt entspricht, der dem geteilten Block eines berührungslosen Teils entspricht, und einen geteilten hinteren Block, der dem Weg entspricht, der den Weg im hinteren Teil des Werkzeugwegs mit berührungslosem Abschnitt und den Weg hinter dem Werkzeugweg mit berührungslosem Abschnitt enthält,
den ersten Block in den geteilten vorderen Block, den geteilten Zwischenblock und den geteilten hinteren Block umzusetzen; und
den geteilten Zwischenblock als den berührungslosen Block zu behandeln.

10. Computer (10) zur Verwendung für eine Umsetzung nach Anspruch 7, wobei
jeder Korrekturblock, der durch die Maschine ausgeführt wird, ein Parameter ist, der von einem Werkzeugformparameter auf dem Speicher der Arbeitsmaschine verschieden ist, und ein Block ist, der einen Wert eines Parameters auf dem Speichert ändert, der eine Werkzeugdurchmesserkompensationsadresse beeinflusst.

11. Computer (10) zur Verwendung für eine Umsetzung nach Anspruch 7, wobei
der Prozessor (11) konfiguriert ist, einen Kommentarblock (601), der einen Korrekturblock identifiziert, hinzuzufügen.

12. Umsetzungsverwendungscomputer nach Anspruch 7, wobei
der Werkzeugroutenkorrekturbetrag anhand der Spindelsteifigkeit der Arbeitsmaschine und der Steifigkeit des Werkzeug bestimmt wird.

## Revendications

1. Procédé de traitement de conversion de programme de commande numérique, CN, qui convertit un programme de commande numérique, CN, avant correction (20) et génère un programme de commande numérique, CN, après correction (1425), le procédé comprenant l'étape consistant à :
sur la base d'une pluralité de blocs dans le programme CN avant correction (20), identifier (S12) un chemin d'outil à portion sans contact, qui est un chemin sur lequel un outil d'une machine de travail exécutant le programme CN avant correction (20) ne vient pas en contact avec une pièce à oeuvrer (W) pendant les processus correspondant aux blocs ;
dans lequel le procédé est **caractérisé en ce qu'**il comprend en outre les étapes consistant à :
identifier (S13) des blocs sans contact, qui sont des blocs ayant uniquement le chemin d'outil à portion sans contact comme chemin ;
déterminer (S20), pour chaque bloc sans contact, une quantité de correction d'itinéraire d'outil dans une direction radiale d'outil dans un processus de travail de la pièce à oeuvrer (W) en accord avec des blocs suivants, qui sont un ou plusieurs blocs, autres que les blocs sans contact, suivant un bloc sans contact respectif ; la quantité de correction d'itinéraire d'outil étant déterminée sur la base d'une rigidité de broche de la machine de travail ou d'une rigidité de l'outil, et
créer (S21) des blocs de correction incluant des descriptions corrigeant l'itinéraire d'outil à raison de la quantité de correction d'itinéraire d'outil respective ;
insérer (S22) les blocs de correction avant les blocs sans contact respectifs.

2. Procédé de traitement de conversion de programme CN selon la revendication 1, comprenant en outre les étapes consistant à :
quand le chemin d'outil à portion sans contact est une partie d'un chemin correspondant à un premier bloc incluant le chemin d'outil à portion sans contact, générer (S15) un bloc sans contact divisé qui est un bloc correspondant à au moins une partie du chemin du chemin d'outil à portion sans contact, et un ou plusieurs blocs divisés correspondant à des chemins autres que le chemin du bloc sans contact divisé du premier bloc ;
convertir le premier bloc en le bloc sans contact divisé et le bloc divisé ; et
traiter le bloc sans contact divisé comme étant le bloc sans contact.

3. Procédé de traitement de conversion de programme CN selon la revendication 2, comprenant en outre les étapes consistant à :
quand le chemin d'outil à portion sans contact est une portion intermédiaire dans le chemin correspondant au premier bloc incluant le chemin d'outil à portion sans contact, générer un bloc avant divisé correspondant au chemin incluant le chemin avant le chemin d'outil à portion sans contact et le chemin à l'avant à l'intérieur du chemin d'outil à portion sans contact, le bloc intermédiaire divisé correspondant uniquement au chemin de la portion intermédiaire du chemin d'outil à portion sans contact correspondant au bloc à partie sans contact divisé, et un bloc arrière divisé correspondant au chemin incluant le chemin à l'arrière du chemin d'outil à portion sans contact et le chemin derrière le chemin d'outil à portion sans contact ;
convertir le premier bloc en le bloc avant divisé, le bloc intermédiaire divisé et le bloc arrière divisé ; et
traiter le bloc intermédiaire divisé comme étant le bloc sans contact.

4. Procédé de traitement de conversion de programme CN selon la revendication 1, dans lequel
chaque bloc de correction exécuté par la machine de travail inclut un paramètre différent d'un paramètre de forme d'outil sur la mémoire de la machine de travail et est un bloc qui change une valeur d'un paramètre sur la mémoire qui affecte une adresse de compensation de diamètre d'outil.

5. Procédé de traitement de conversion de programme CN selon la revendication 1, dans lequel
un bloc de commentaire (601) qui identifie un bloc de correction est ajouté.

6. Procédé de traitement de conversion de programme CN selon la revendication 1, dans lequel
la quantité de correction d'itinéraire d'outil est déterminée sur la base de la rigidité de broche de la machine de travail et de la rigidité de l'outil.

7. Ordinateur à usage de conversion (10) qui inclut un processeur (11), convertit un programme de commande numérique, CN, avant correction (20), et génère un programme de commande numérique, CN, après correction (1425), dans lequel
le processeur (11) est configuré pour
sur la base d'une pluralité de blocs dans le programme CN avant correction (20), identifier un chemin d'outil à portion sans contact, qui est un chemin sur lequel un outil d'une machine de travail exécutant le programme CN avant correction (20) ne vient pas en contact avec une pièce à oeuvrer (W) pendant les processus correspondant aux blocs, ledit ordinateur à usage de conversion (10) étant **caractérisé en ce que** le processeur (11) est configuré pour
identifier des blocs sans contact, qui sont des blocs ayant uniquement le chemin d'outil à portion sans contact comme chemin,
sur la base d'une rigidité de broche de la machine de travail ou d'une rigidité de l'outil, déterminer, pour chaque bloc sans contact, une quantité de correction d'itinéraire d'outil dans une direction radiale d'outil dans un processus de travail de la pièce à oeuvrer (W) en accord avec des blocs suivants, qui sont un ou plusieurs blocs, autres que les blocs sans contact, suivant un bloc sans contact respectif,
créer des blocs de correction incluant des descriptions corrigeant l'itinéraire d'outil à raison de la quantité de correction d'itinéraire d'outil respective, et
insérer les blocs de correction avant les blocs sans contact respectifs.

8. Ordinateur à usage de conversion (10) selon la revendication 7, dans lequel
le processeur (11) est configuré pour
quand le chemin d'outil à portion sans contact est une partie d'un chemin correspondant à un premier bloc incluant le chemin d'outil à portion sans contact, générer un bloc sans contact divisé, qui est un bloc correspondant à au moins une partie du chemin du chemin d'outil à portion sans contact, et un ou plusieurs blocs sans contact divisés correspondant à des chemins autres que le chemin du bloc sans contact divisé du premier bloc,
convertir le premier bloc en le bloc sans contact divisé et le bloc divisé, et
traiter le bloc sans contact divisé comme étant le bloc sans contact.

9. Ordinateur à usage de conversion (10) selon la revendication 8, dans lequel
le processeur (11) est configuré pour
quand le chemin d'outil à portion sans contact est une portion intermédiaire dans le chemin correspondant au premier bloc incluant le chemin d'outil à portion sans contact, générer un bloc avant divisé correspondant au chemin incluant le chemin avant le chemin d'outil à portion sans contact et le chemin à l'avant à l'intérieur du chemin d'outil à portion sans contact, le bloc intermédiaire divisé correspondant uniquement au chemin de la portion intermédiaire du chemin d'outil à portion sans contact correspondant au bloc à partie sans contact divisé, et un bloc arrière divisé correspondant au chemin incluant le chemin à l'arrière du chemin d'outil à portion sans contact et le chemin derrière le chemin d'outil à portion sans contact,
convertir le premier bloc en le bloc avant divisé, le bloc intermédiaire divisé et le bloc arrière divisé, et
traiter le bloc intermédiaire divisé comme étant le bloc sans contact.

10. Ordinateur à usage de conversion (10) selon la revendication 7, dans lequel
chaque bloc de correction exécuté par la machine de travail inclut un paramètre différent d'un paramètre de forme d'outil sur la mémoire de la machine de travail et est un bloc qui change une valeur d'un paramètre sur la mémoire qui affecte une adresse de compensation de diamètre d'outil.

11. Ordinateur à usage de conversion (10) selon la revendication 7, dans lequel
le processeur (11) est configuré pour ajouter un bloc de commentaire (601) qui identifie un bloc de correction.

12. Ordinateur à usage de conversion selon la revendication 7, dans lequel
la quantité de correction d'itinéraire d'outil est déterminée sur la base de la rigidité de broche de la machine de travail et de la rigidité de l'outil.
